# FASCICULE DE BREVET EUROPEEN

(11) **EP 0 840 023 B1**
(45) Date de publication et mention de la délivrance du brevet: **10.01.2001**
(21) Numéro de dépôt: 97402392.1
(22) Date de dépôt: 10.10.1997
(51) Int. Cl.: F16C 11/12

(54) **Pivot flexible planaire à modules unitaires monolithiques**
Flexibles planares Gelenk mit einzelnen, monolithischen Modulen
Flexible planar pivot with single monolithic modules

(30) Priorité: 11.10.1996 FR 9612456
(43) Date de publication de la demande: 06.05.1998
(73) Titulaire: C.S.E.M. CENTRE SUISSE D'ELECTRONIQUE ET DE MICROTECHNIQUE SA, 2007 Neuchâtel (CH)
(72) Inventeur: Genequand, Pierre-Marcel, 75116 Paris (FR)
(74) Mandataire: Ballot, Paul

(56) Documents cités:
- EP-A- 0 015 353
- EP-A- 0 275 338
- CH-A- 452 286
- DE-A- 3 241 373
- US-A- 2 793 028
- US-A- 2 920 498
- US-A- 3 405 539
- US-A- 4 919 993

## Description

La présente invention concerne un pivot flexible planaire à lames croisées selon la préambule de la revendication 1.

La technologie des articulations élastiques enseigne, de manière classique, que, pour des guidages à faible amplitude de déplacement, il y a avantage à utiliser la propriété d'une lame mince et allongée, encastrée à une extrémité et sollicitée à l'autre extrémité, de se prêter aisément à un mouvement de flexion dans la direction perpendiculaire à la lame, tout en restant rigide dans les directions parallèles.

Lorsque les déformations sont calculées pour rester bien en-deçà des limites élastiques et des charges de flambage, on obtient un dispositif parfaitement précis et reproductible, sans jeu, sans frottement, sans usure et ne présentant pas de phénomènes de grippage. La reproductibilité n'est limitée que par l'hystérésis résiduelle appliquée aux effets non compensés, dus à la variation des charges et à la rigidité finie des lames. Signalons également qu'aucune lubrification n'est nécessaire.

Dans les limites de déflexion statique mentionnées, les articulations élastiques présentent ainsi de grands avantages sur les articulations cinématiques conventionnelles, telles que paliers, coulisses, roulements. Les limites de charges permises sont d'autant plus élevées que les déflexions demandées sont faibles et que l'épaisseur des articulations élastiques peut être forte.

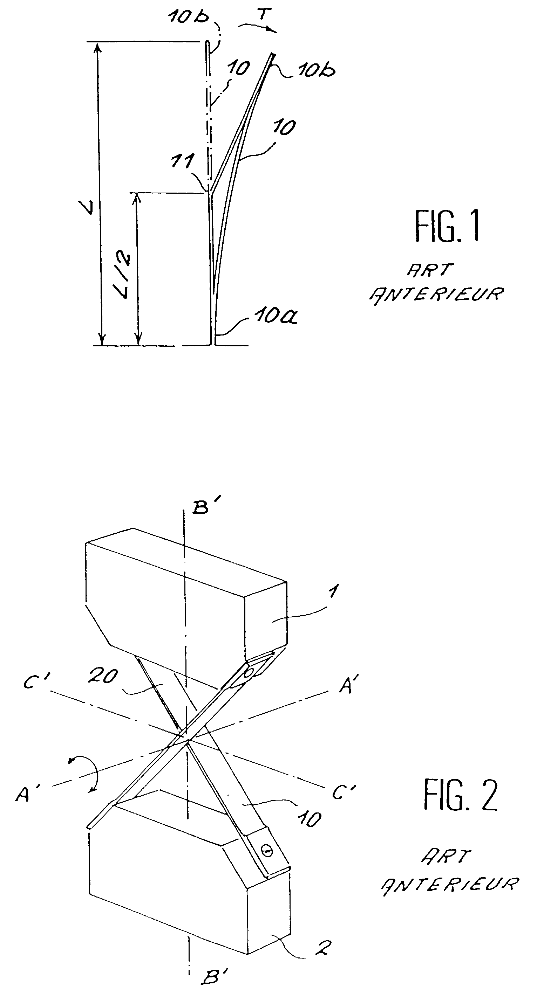

Le principe du pivot flexible à une lame est illustrée sur la figure 1 qui est une vue de côté d'une lame flexible 10 de longueur L dont une extrémité 10a est encastrée. Lorsqu'on applique un couple T à l'extrémité libre 10b de la lame 10, celle-ci se courbe et ladite extrémité libre 10b se déplace en pivotant en première approximation autour de l'axe passant par le centre 11 de la lame 10 au repos, définissant ainsi un pivot à lame flexible.

Cependant le pivot à une lame n'est pas stable sous l'effet d'une charge perpendiculaire au plan de la lame. Pour remédier à cet inconvénient on a conçu le pivot à lames croisées dont un exemple de réalisation est montrée sur la vue en pespective de la figure 2. Dans cet exemple, les deux lames 10, 20 sont croisées à angle droit, leurs extrémités étant fixées par vis sur des supports 1, 2.

Afin de rendre le pivot flexible à lames croisées stable sans l'effet des charges hors plan, on peut mettre en oeuvre deux paires de lames croisées situées symétriquement à une certaine distance axiale l'une de l'autre. On obtient ainsi une grande raideur transversale et une bonne résistance aux actions parasites. De plus, le centre instantané de rotation est pratiquement fixe jusqu'à des angles de pivotement de 10°.

On a également tenté de compenser la réaction élastique de rotation des pivots à lames flexibles en soumettant les lames à une traction, l'énergie élastique étant échangée entre les lames et des ressorts de traction. Parmi les pivots de ce type, on connaît un dispositif à 3 lames disposées à 120° qui présente en outre l'avantage de permettre en principe une rotation autour d'un axe invariable en fonction de la déflexion de pivotement.

Toutefois, les pivots flexibles à lames croisées connus présente un certain nombre d'inconvénients.

En effet, tous les pivots mentionnés plus haut sont basés sur le concept de lames séparées distinctes qui doivent être vissées, collées ou soudées sur des supports. Dans tous les cas, la zone d'assemblage lame/support est soumise à un ensemble de contraintes dues aux effets combinés de la flexion de rotation des lames, de la charge externe, notamment axiale, et des contraintes hyperstatiques internes (effets de membrane) agisant sur le pivot. Cet état de sollicitation mécanique constitue un facteur important de desserrage ou de décollage des assemblages et peut conduire à la rupture par fatigue cyclique des parties soudées.

De plus, la position de l'axe de pivotement varie avec la rotation, ce qui correspond à un balourd du pivot. S'ajoutant à la variation systématique prévue par la théorie, on observe également des variations plus ou moins réversibles et aléatoires dues aux effets d'hyperstaticité de membrane. Ce dernier comportement dépend également de la déformation de serrage lorsque les supports de fixation du pivot sont cylindriques.

Enfin, l'automatisation de l'assemblage ainsi que la miniaturisation des pivots à lames séparées sont difficiles à réaliser, ce qui rend le coût des pivots de petite taille comparativement élevé.

Aussi, un but de la présente invention est de proposer un pivot flexible à lames qui permettrait de simplifier et d'automatiser les opérations d'assemblage, d'atténuer les effets de contraintes dans les supports et de rendre possible la miniaturisation des pièces. Le document US-A-4 919 993 ne décrit qu'un pivot à lames flexibles croisées du type connu qui est en entier sous la forme d'un bloc monolithique.

A cet effet, l'invention concerne un pivot flexible planaire à lames croisées du type connu avec les caractéristiques de la deuxième partie de la revendication 1.

Afin d'éviter la concentration de contraintes élevées et leur transmission dans les éléments de liaison, il est prévu, selon l'invention, que, pour chaque module, ladite lame flexible présente à chaque extrémité une zone de transition à section progressivement variable, formant jonction entre la lame et chaque élément de liaison.

Pour un bon fonctionnement du pivot flexible planaire, objet de l'invention, il y a avantage à ce que les lames croisées de deux modules voisins ne se touchent pas après empilement. Dans ce but, l'invention prévoit que ladite lame flexible présente une zone de réduction d'épaisseur entre les deux éléments de liaison. Une solution alternative serait d'utiliser des cales d'épaisseur.

Comme cela a déjà été mentionné plus haut, l'axe de pivotement des structures articulées sur lames croisées se déplace au cours de la rotation, ce qui conduit à des effets de balourd. Les pivots flexibles planaires conformes à l'invention offrent des possibilités de réaliser des assemblages comportant des moyens de compensation des effets de balourd.

Deux assemblages différents, qui seront décrits en détail plus loin, sont proposés par l'invention pour obtenir cet effet de compensation.

Selon l'invention, un premier assemblage, dit à compensation série, comprend une interface interne reliée à chaque extrémité à une interface externe par l'intermédiaire d'un ensemble de pivots flexibles planaires à deux modules unitaires à lames croisées, disposés en série.

Un deuxième assemblage, dit à compensation parallèle est remarquable en ce qu'il comprend, d'une part, une première structure planaire d'au moins un pivot flexible planaire à deux modules unitaires à lames croisées, dont des premiers éléments de liaison forment une première interface rigide et dont des deuxièmes éléments de liaison forment une interface intermédiaire de recul, laquelle est reliée à une deuxième interface rigide par un parallélogramme élastique orthogonal au pivot, et, d'autre part, une deuxième structure planaire, identique à la première, lesdites première et deuxième structures planaires étant superposées en parallèle en position tête-bêche et assemblées par leurs premières et deuxièmes interfaces rigides respectives, lesdites interfaces intermédiaires de recul étant libres.

Grâce à leur planéité, à leur modularité d'empilement et à leur encombrement axial réduit, les pivots flexibles planaires de l'invention peuvent s'intégrer selon de nombreuses combinaisons dans les ensembles mécaniques.

Leur rigidité axiale relativement faible n'est pas nécessairement un inconvénient. Cette propriété permet d'atténuer, voire de supprimer, les phénomènes d'instabilité hyperstatique de membrane. Elle permet également de tolérer une déformation suffisante pour la mise en oeuvre de liaisons axiales telles que les butées de sécurité, ce qui est difficile avec les pivots connus de l'état de la technique.

Afin de stabiliser la liaison mécanique pivotante aux efforts hors plan, les pivots flexibles planaires conformes à l'invention devront en général être montés deux par deux, à une certaine distance axiale l'un de l'autre.

C'est dans le but d'obtenir cette configuration de base qu'il est proposé une application du pivot flexible planaire de l'invention à la réalisation d'un montage universel de liaison pivotante, remarquable en ce qu'une interface centrale emboîtable dans une interface externe est montée pivotante par rapport à ladite interface externe par l'intermédiaire d'au moins un pivot flexible planaire à deux modules unitaires à lames croisées dont les éléments de liaison sont fixés respectivement à l'interface centrale et à l'interface externe.

Le montage universel de liaison pivotante peut à son tour être mis en oeuvre dans de nombreuses applications qui seront explicitées plus loin, telles que montage à la Cardan, liaison pivotante à butée de contact, liaison pivotante à tige de torsion.

La description qui va suivre en regard des dessins annexés, donnés à titre d'exemples non limitatifs, fera bien comprendre en quoi consiste l'invention et comment elle peut être réalisée.
- la figure 3a est une vue de côté d'un pivot flexible planaire à deux modules unitaires, conforme à l'invention;
- la figure 3b est une vue de face du pivot de la figure 3a;
- la figure 4 est une vue de dessus d'une plaque pour fabrication par lots des modules unitaires des figures 3a et 3b;
- la figure 5a est une vue de côté d'un assemblage de pivots planaires à compensation série de balourd;
- la figure 5b est un graphe montrant l'effet de compensation de balourd de l'assemblage de la figure 5a;
- la figure 6a est une vue de face d'une première structure d'un assemblage de pivots planaires à compensation parallèle de balourd;
- la figure 6b est une vue de face d'une deuxième structure d'un assemblage de pivots planaires à compensation parallèle de balourd;
- la figure 6c est une vue de face de l'assemblage de pivots planaires à compensation de balourd réalisé par empilement des structures des figures 6a et 6b;
- la figure 7 est une vue de face d'un montage à la Cardan réalisé au moyen de pivots planaires conformes à l'invention;
- la figure 8a est une vue de dessus d'une liaison pivotante à butée de contact réalisée au moyen de pivots planaires conformes à l'invention;
- la figure 8b est une vue de face de la liaison pivotante de la figure 8a;
- la figure 9a est une vue de dessus d'une liaison pivotante à tige de torsion réalisée au moyen de pivots planaires conformes à l'invention;
- la figure 9b est une vue de face de la liaison pivotante de la figure 9a;
- la figure 10a est une vue de dessus d'un bras de lecture/enregistrement d'un disque dur d'ordinateur muni de pivots flexibles planaires conformes à l'invention;
- la figure 10b est une vue de dessus d'une pile de bras individuellement mobiles, munis de pivots flexibles planaires conformes à l'invention;
- la figure 10c est une vue partielle de face de la pile de bras de la figure 10b;
- la figure 11 est une vue de face d'un capteur de position angulaire intégré,
- la figure 12 est un schéma d'un circuit de mesure qui peut être utilisé dans le capteur de position angulaire intégré de la figure 11, et
- la figure 13 est un schéma d'un montage à deux pivots imbriqués l'un dans l'autre de telle façon que les centres de rotation des pivots soient décalés l'un par rapport à l'autre.

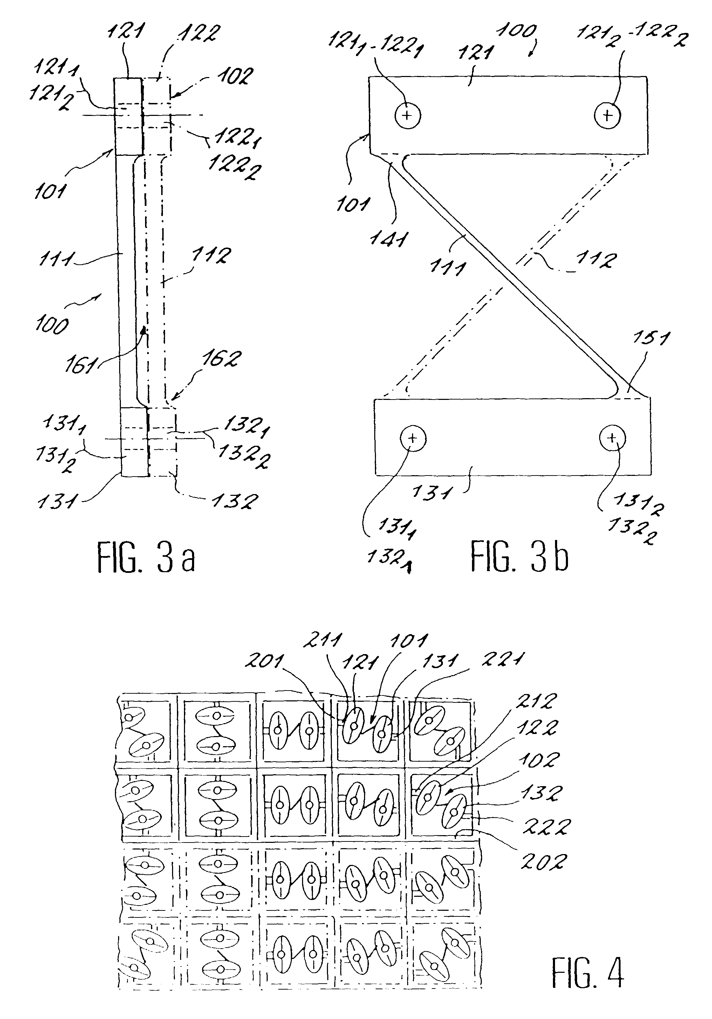

Les figures 3a et 3b montrent un pivot flexible planaire 100, constitué par un empilement axial de deux modules unitaires 101, 102, chacun des deux modules unitaires formant un ensemble monolithique comportant deux éléments de liaison rigides coplanaires 121, 131 et 122, 132 respectivement, disposés sensiblement en regard l'un de l'autre et reliés diagonalement par une lame flexible essentiellement rectiligne 111, 112 respectivement.

Pour réaliser le pivot flexible planaire 100, les deux modules unitaires 101, 102 sont assemblés par leurs éléments de liaison 121, 131 et 122, 132 respectifs par collage, soudure ou liaison anodique. Eventuellement des trous d'assemblage 121₁, 121₂, 131₁, 131₂, 122₁, 122₂, 132₁, 132₂ peuvent être prévus dans les éléments de liaison.

Comme le montre plus particulièrement la figure 3b, les lames flexibles, telle que la lame 111, présentent à chaque extrémité une zone de transition 141, 151 à section progressivement variable, formant jonction entre la lame 111 et les éléments 121, 131 de liaison. Cette disposition permet d'éviter la concentration de contraintes élevées et leur transmission dans les éléments de liaison.

On peut voir sur la figure 3a que les lames flexibles 111, 112 présentent une zone 161, 162 de réduction d'épaisseur entre les deux éléments 121, 131 et 122, 132 de liaison, ceci afin que deux lames voisines, telles que 111 et 112, ne se touchent après empilement. On peut également éviter cet inconvénient au moyen de cales d'épaisseur placées entre les éléments de liaison de deux modules unitaires voisins.

La figure 3b montre que les modules unitaires 101, 102 du pivot flexible planaire 100 sont assemblés de manière telle que la lame flexible 111 du module unitaire 101 est croisée avec la lame flexible 112 du module unitaire voisin 102. On réalise ainsi un pivot planaire à lames croisées. En particulier, lesdites lames flexibles 111, 112 sont croisées à angle droit.

Les modules 101, 102 peuvent être obtenus unitairement selon divers procédés de production de masse comme l'usinage de plaques métalliques par électroérosion à fil (acier, Al, Cu-Be), l'injection de plastique renforcé par des fibres à haute résistance (verre, carbone) ou encore la microlithogravure en lots sur une plaque de silicium.

La figure 4 montre partiellement une plaque de silicium sur laquelle ont été microlithogravés des modules unitaires 101, 102. Pour faciliter la manipulation de ces modules de base, qui restent fragiles jusqu'à leur assemblage dans un empilement, il est prévu de relier provisoirement chaque élément de liaison 121, 131 et 122, 132 à un cadre porteur, respectivement 201, 202, par des ponts d'attache 211, 221 et 212, 222. Cette structure temporaire peut également servir à positionner les modules pendant l'opération d'assemblage. Finalement, les modules unitaires sont libérés par sciage des ponts d'attache.

Ainsi, la production d'un lot de pivots flexibles planaires à lames croisées à deux modules peut être réalisée selon la séquence suivante:
- masquage et découpe de la plaque de silicium;
- séparation des cadres par sciage;
- superposition et liaison anodique des modules en position croisée;
- libération des ponts d'attache par sciage.

Notons également que les zones de réduction d'épaisseur des lames flexibles peuvent être usinées en série dans la plaque avant l'opération de découpe.

Comme cela a été mentionné plus haut, les pivots flexibles planaires proposés par l'invention offrent des possibilités particulièrement avantageuses pour compenser les effets de malrond ou de balourd dus au déplacement de l'axe de pivotement des pivots au cours de la rotation.

La figure 5a montre un premier assemblage, dit montage en série, de pivots flexibles planaires, analogues à celui des figures 3a et 3b, permettant de compenser les efforts de balourd. Cet assemblage comprend une interface interne 401 reliée à chaque extrémité à une interface externe 402, 402' par l'intermédiaire d'un ensemble 300, 300' de pivots 100 flexibles planaires à deux modules 101, 102 à lames croisées, disposés en série. Dans l'exemple de la figure 5a, les ensembles sont constitués de deux pivots 100 en série assemblés par un espaceur 301, 301' et collage.

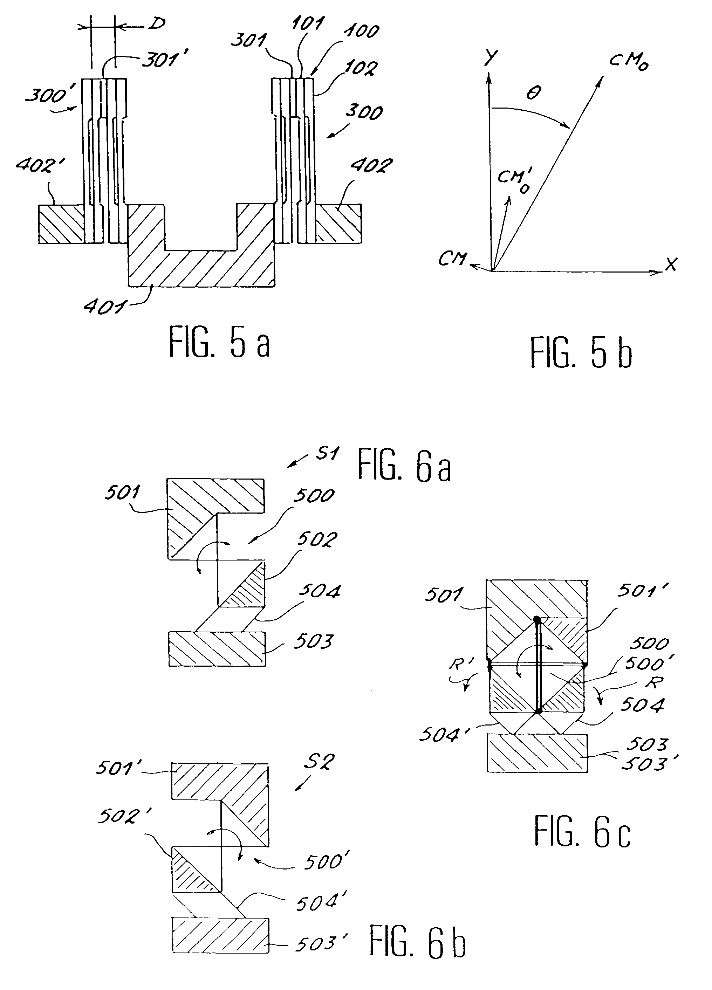

La compensation obtenue est très efficace, comme le montre le diagramme de la figure 5b qui donne, dans un repère X-Y centré sur un pivot, le déplacement CMo du centre matériel de rotation aux très petites déflexions d'un pivot (c'est-à-dire, un point matériel associé aux faibles rotations) non compensé pour une rotation Θ, le déplacement CMo' du centre matériel de rotation du même pivot non compensé pour une rotation Θ/2 et le déplacement CM du centre matériel de rotation d'un pivot compensé en série pour une rotation Θ.

Bien que cet assemblage soit un peu moins rigide radialement, qu'il présente un désaxement D et qu'il inclut une partie intermédiaire flottante, l'exécution planaire permet de maintenir masse intermédiaire et désaxement très petits.

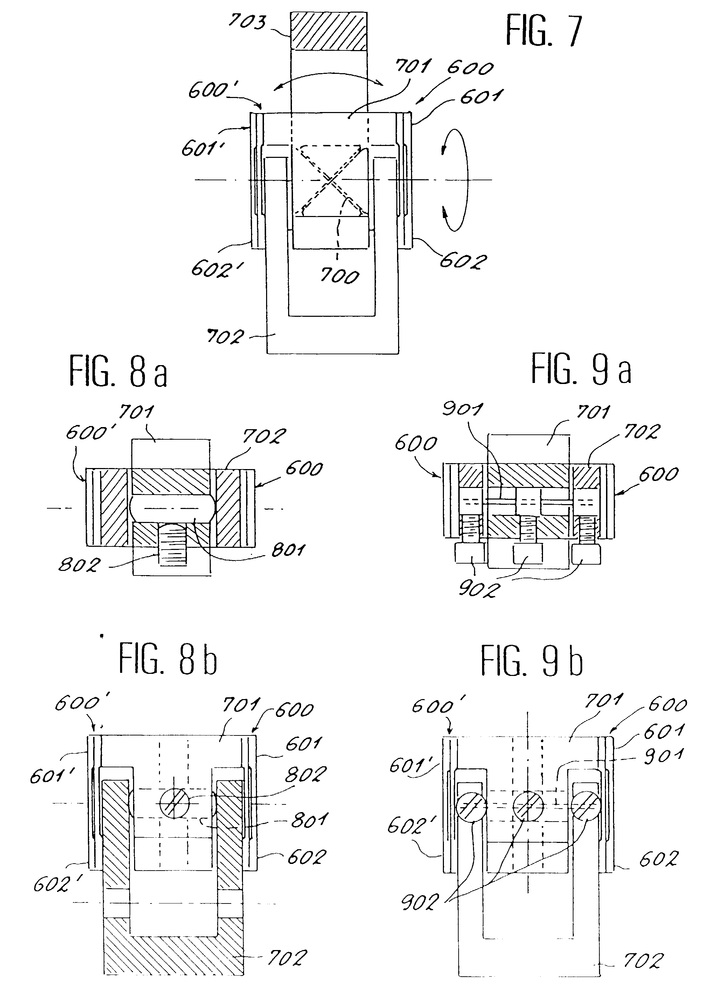

La partie flottante et le désaxement de la compensation - série précédemment décrite peuvent être évités par l'assemblage de compensation - parallèle illustré sur les figures 6a, 6b et 6c.

Selon cet assemblage, une première structure S1, montrée à la figure 6a, comporte au moins un pivot flexible planaire 500 à deux modules unitaires à lames croisées, dont les premiers éléments 501 de liaison forment une première interface rigide et dont les deuxièmes éléments 502 de liaison forment une interface intermédiaire de recul, laquelle est reliée à une deuxième interface rigide 503 par un parallélogramme élastique 504 orthogonal au pivot 500.

La figure 6b représente une deuxième structure S2 identique à la première, mais placée tête-bêche par rapport à la structure S1.

Les deux structures S1 et S2 sont superposées dans cette position relative pour constituer l'assemblage final de la figure 6c, les premières 501, 501' et deuxièmes 503, 503' interfaces rigides étant assemblées entre elles respectivement, tandis que les interfaces intermédiaires 502, 502' de recul restent libres de reculer selon les flèches R et R' visibles sur la figure 6c.

Dans ces conditions, on peut montrer que la seule position possible pour le centre matériel de rotation de l'interface globale modifié 501 se situe au croisement des deux droites de recul.

La figure 7 illustre un premier exemple d'application des pivots flexibles planaires à lames croisées conformes à l'invention. Cet exemple, qui concerne un montage à la Cardan, est construit sur un montage universel de liaison pivotante caractérisée par une interface centrale 701 emboîtable dans une interface externe 702 et montée pivotante par rapport à ladite interface externe 702 par l'intermédiaire de deux pivots flexibles planaires 600, 600' à deux modules unitaires à lames croisées dont les éléments 601, 601', 602, 602' de liaison sont fixés respectivement à l'interface centrale 701 et à l'interface externe 702.

Pour réaliser le montage à la Cardan de la figure 7 à deux axes de pivotement perpendiculaires, il suffit de compléter le montage universel précédent par au moins un pivot flexible planaire 700 à deux modules unitaires à lames croisées, orthogonal aux pivots 600, 600' et reliant l'interface centrale 701 à une deuxième interface externe 703.

Les figures 8a et 8b montrent une deuxième application du montage universel décrit plus haut à la réalisation d'une liaison pivotante à butée de contact, dans laquelle l'interface centrale 701 comporte une butée axiale ajustable 801 de contact maintenue par une vis 802 de serrage.

De même, les figures 9a et 9b donnent une troisième application du montage universel précité à la réalisation d'une liaison pivotante à tige de torsion, selon laquelle l'interface centrale 701 comporte une tige axiale ajustable 901 de torsion et des vis 902 de serrage.

Enfin, d'une manière générale, les pivots à course limitée peuvent être avantageusement équipés d'actionneurs du type électrodynamique, l'aimant et la bobine étant attachés chacun à une des interfaces du pivot.

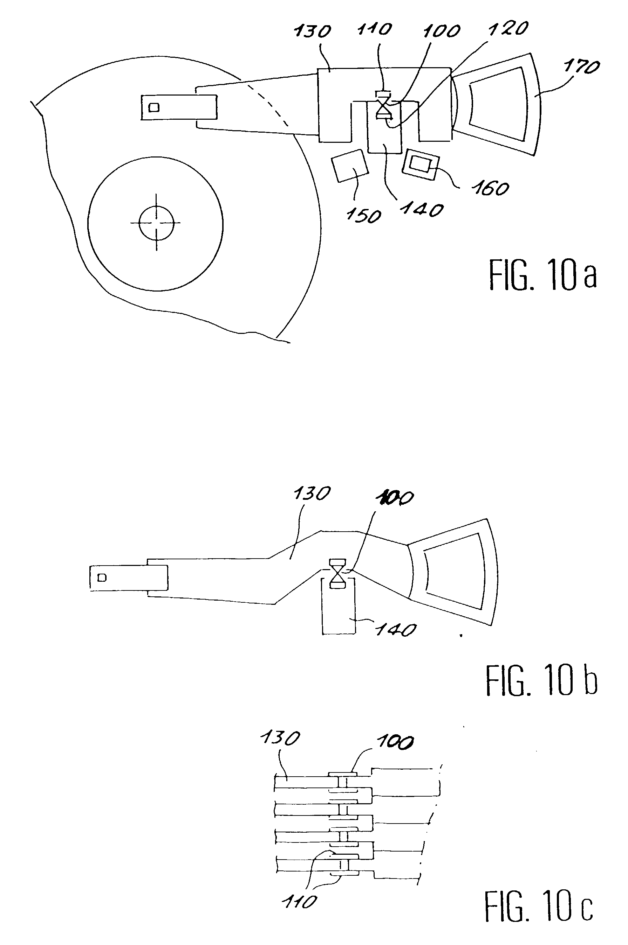

Une telle intégration est réalisable sur des pivots flexibles planaires par exemple pour le montage des articulations légères d'automates d'assemblage, ou la commande d'attitude des systèmes de minicaméras d'observation. On peut aussi envisager, comme l'indique la figure 10, de modifier la forme des interfaces pour les adapter à une application particulière, tel que par exemple le pivot de bras de lecture/enregistrement de disque dur d'ordinateur. Dans le cas de la figure 10a, le bras 130 portant la bobine 170 est monté pivotant sur une interface mobile 110 du pivot 100 à lames croisées, la course en rotation des bras étant limitée par la butée 150 et la butée 160 à verrou de parcage. La deuxième interface 120 du pivot 100 est montée sur un élément fixe 140.

Actuellement, les bras des multidisques sont empilés sur un bloc rigide monté sur roulements à billes. On peut cependant aller plus loin et envisager des bras 130 à orientation individuelle au moyen de pivots flexibles planaires 100, comme le montrent les figures 10b et 10c. Notons que ce dernier concept n'est pas réalisable avec des roulements à billes.

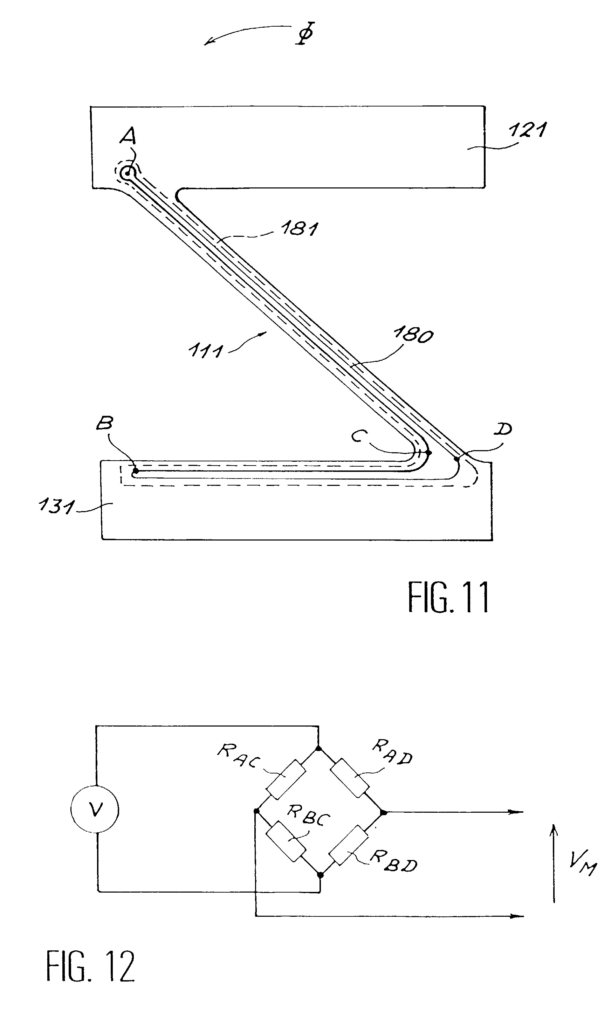

La figure 11 est une vue de face d'une autre application du module unitaire pour pivot flexible selon l'invention à la réalisation d'un capteur de position angulaire intégré. A cet effet, la lame flexible 111 et l'un des éléments de liaison, par exemple, celui référencé 131, sont munis d'un ruban 180 suivant le tracé en boucle fermée ACBD de type résistif, piézorésistif ou piézoélectrique. Ce ruban est fixé par l'intermédiaire d'une couche isolante 181. Le ruban 180 et la couche isolante 181 peuvent être obtenus par un procédé de dépôt ou autre.

Dans le cas d'un ruban résistif, par suite de sa déformation, la valeur de la résistance R_{AD} entre les points A et D est proportionnelle à l'angle de rotation +Φ tandis que la valeur de la résistance R_{AC} entre les points A et C est proportionnelle à l'angle de rotation -Φ. Par contre, les valeurs des résistances R_{BC} entre les points B et C et R_{BD} entre les points B et D sont constantes.

Pour mesurer l'angle Φ, un circuit du type pont de Wheatstone selon le schéma de la figure 12 est utilisé. La tension de sortie V_{M} est une fonction de l'angle de rotation Φ.

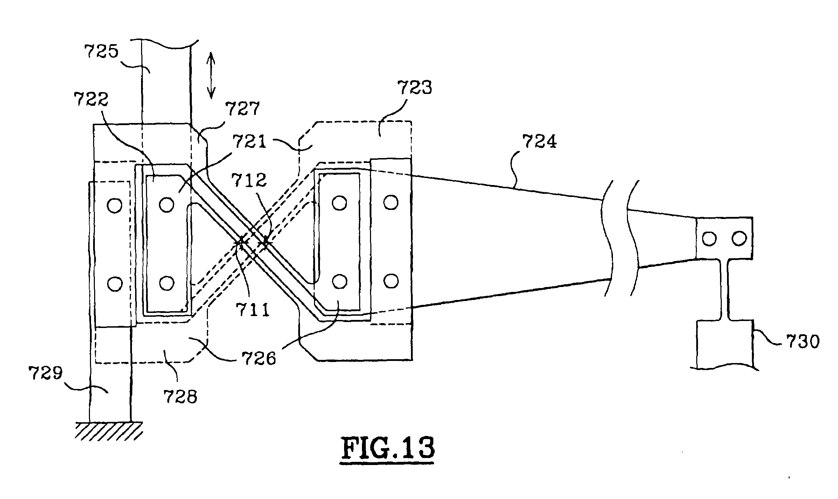

Le montage qui est proposé par le schéma de la figure 13 comprend deux pivots, tels que ceux décrits en relation avec les figures 3a et 3b, imbriqués l'un dans l'autre de telle façon que les centres de rotation 711 et 712 des pivots soient décalés l'un par rapport à l'autre.

Le premier pivot 721 comprend un module 722 et un module 723 qui sont fixés chacun, d'une part, à un bras de levier 724 et, d'autre part, à une pièce mobile 725.

Le deuxième pivot 726 comprend un module 727 et un module 728 qui sont fixés chacun, d'une part au bras du levier 724 et, d'autre part, à une base fixe 729.

Lorsque le bras de levier 724 est déplacé sous l'action d'un dispositif piézoélectrique 730, le double pivot entraîne le déplacement en sens inverse de la pièce mobile 725 sur une distance réduite par rapport au déplacement du dispositif piézoélectrique. Le facteur de réduction dépend de la longueur du bras de levier ainsi que de la distance entre les centres de rotation 711 et 712 des deux pivots.

Le montage qui vient d'être décrit fonctionne dans les deux sens, c'est-à-dire qu'un déplacement de la pièce mobile 725 entraîne un déplacement du bras de levier avec un facteur d'amplification.

## Revendications

1. Pivot flexible planaire à lames croisées (100) formé d'au moins deux modules unitaires parties (101, 102) identiques comportant chacune deux éléments (121, 131 ; 122, 132) de liaison rigides et coplanaires, disposés sensiblement en regard l'un de l'autre et reliés diagonalement par une lame flexible (111 ; 112) essentiellement rectiligne, la lame flexible (111) d'une partie (101) étant croisée avec la lame flexible (112) d'une partie voisin (102), caractérisé en ce que chaque partie (101, 102) est un module unitaire constituant un ensemble monolithique, les modules unitaires étant assemblés par leurs éléments de liaison respectifs (121, 131 ; 122, 132) de manière que chaque élément de liaison d'un module unitaire est assemblé en contact direct avec un élément de liaison adjacent menant à un empilement axial.

2. Pivot selon la revendication 1, caractérisé en ce que la lame flexible (111) de chaque module unitaire présente à chaque extrémité une zone (141, 151) de transition à section progressivement variable, formant jonction entre la lame (111) et chaque élément (121, 131) de liaison.

3. Pivot selon l'une des revendication 1 ou 2, caractérisé en ce que ladite lame flexible (111; 112) présente une zone (161; 162) de réduction d'épaisseur entre les deux éléments (121, 131; 122, 132) de liaison.

4. Pivot selon la revendication 1, 2 ou 3, caractérisé en ce que lesdites lames flexibles (111, 112) sont croisées à angle droit.

5. Pivot selon l'une quelconque des revendications 1 à 4, caractérisé en ce que les éléments (121, 131; 122, 132) de liaison des modules unitaires (101; 102) sont assemblés par collage, soudure ou liaison anodique.

6. Procédé de fabrication d'un module unitaire d'un pivot selon l'une quelconque des revendications 1 à 5, caractérisé en ce que ledit procédé consiste en un usinage de plaques métalliques par électroérosion à fil.

7. Procédé de fabrication d'un module unitaire d'un pivot selon l'une quelconque des revendications 1 à 5, caractérisé en ce que ledit procédé consiste en une injection de plastique renforcée par des fibres de haute résistance.

8. Procédé de fabrication d'un module unitaire d'un pivot selon l'une quelconque des revendications 1 à 5, caractérisé en ce que ledit procédé consiste en une microlithogravure en lots sur une plaque de silicium.

9. Procédé selon l'une quelconque des revendications 6 à 8, caractérisé en ce que ledit module unitaire (101; 102) est réalisé à l'intérieur d'un cadre porteur (201; 202) auquel il est relié provisoirement par des ponts (211, 221; 212, 222) d'attache.

10. Assemblage de pivots flexibles planaires selon l'une quelconque des revendications 1 à 5, caractérisé en ce qu'il comporte des moyens de compensation des effets de balourd ou de malrond.

11. Assemblage selon la revendication 10, caractérisé en ce qu'il comprend une interface interne (401) reliée à chaque extrémité à une interface externe (402, 402') par l'intermédiaire d'un ensemble (300, 300') de pivots (100) flexibles planaires à deux modules unitaires à lames croisées, disposées en série.

12. Assemblage selon la revendication 10, caractérisé en ce qu'il comprend d'une part, une première structure planaire (S1) d'au moins un pivot flexible planaire (500) à deux modules unitaires à lames croisées, dont des premiers éléments (501) de liaison forment une première interface rigide et dont des deuxièmes éléments (502) de liaison forment une interface intermédiaire de recul, laquelle est reliée à une deuxième interface rigide (503) par un parallélogramme élastique (504) orthogonal au pivot (500), et d'autre part, une deuxième structure planaire (S2), identique à la première, lesdites première (S1) et deuxième (S2) structures planaires étant superposées en parallèle en position tête-bêche et assemblées par leurs premières (501, 501') et deuxièmes (503, 503') interfaces rigides respectives, lesdites interfaces intermédiaires (502, 502') de recul étant libres.

13. Application du pivot flexible planaire selon l'une quelconque des revendications 1 à 5 à la réalisation d'un montage universel de liaison pivotante, caractérisée en ce qu'une interface centrale (701) emboîtable dans une interface externe (702) est montée pivotante par rapport à ladite interface externe (702) par l'intermédiaire d'au moins un pivot flexible planaire (600, 601) à deux modules unitaires à lames croisées dont les éléments (601, 601'; 602, 602') de liaison sont fixés respectivement à l'interface centrale (701) et à l'interface externe (702).

14. Application du montage universel selon la revendication 13 à la réalisation d'un montage à la Cardan, caractérisée en ce que ladite interface centrale (701) comporte au moins un pivot flexible planaire (700) à deux modules unitaires à lames croisées, orthogonal audit pivot flexible planaire (600, 600'), reliant ladite interface centrale (701) à une deuxième interface externe (703).

15. Application du montage universel selon la revendication 13 à la réalisation d'une liaison pivotante à butée de contact, caractérisée en ce que ladite interface centrale (701) comporte une butée axiale (801) de contact ajustable maintenue par une vis (802) de serrage.

16. Application du montage universel selon la revendication 13 à la réalisation d'une liaison pivotante à tige de torsion, caractérisée en ce que ladite interface centrale (701) comporte une tige axiale (901) de torsion ajustable et au moins une vis (902) de serrage.

17. Application du pivot flexible planaire selon l'une quelconque des revendications 1 à 5 à un actionneur électrodynamique à aimant et bobine, caractérisée en ce que ladite bobine (170) est solidaire d'une interface pivotante (110) du pivot (100), l'autre interface (120) étant fixe et solidaire dudit aimant.

18. Application selon la revendication 17 à des bras de multidisques, caractérisée en ce que lesdits bras (130) sont équipés, chacun, d'un pivot flexible planaire (100) pour une orientation individuelle de chaque bras.

19. Application du pivot flexible planaire selon l'une quelconque des revendications 1 à 5 à un capteur de position angulaire intégré, caractérisée :
- en ce que la lame flexible (111) et l'un des deux éléments rigides (121 ou 131) comprennent un ruban de type résistif, piézorésistif ou piézoélectrique (180) qui réalise une boucle fermée (ABCD), de manière que les valeurs des paramètres mesurés entre le point A et les points C et D varient en fonction de l'angle de rotation (Φ) de la lame flexible tandis que les valeurs entre le point B et les points C et D restent constantes, et
- en ce qu'au moins les points A, C et D sont connectés à un circuit de mesure des valeurs des paramètres variables.

20. Assemblage de pivots flexibles planaires selon l'une des revendications 1 à 5, caractérisé en ce qu'il comprend deux pivots flexibles imbriqués l'un dans l'autre de telle façon que les centres de rotation soient décalés l'un par rapport à l'autre,
- un premier pivot (721) comprenant un premier module unitaire (722) et un deuxième module unitaire qui sont fixés chacun, d'une part, à un bras de levier (724) et, d'autre part, à une pièce mobile (725),
- un deuxième pivot (722) comprenant un premier module (727) et un deuxième module (728) qui sont fixés chacun, d'une part, au bras de levier (724) et, d'autre part, à une base fixe (729).

21. Assemblage selon la revendication 20, caractérisé en ce que le bras de levier (724) est connecté à un dispositif piézoélectrique (730).

## Patentansprüche

1. Flexibles planares Schwenkgelenk mit sich kreuzenden Blättern, die von mindestens zwei identischen Teilen (101, 102) gebildet sind, die jeweils zwei starre, koplanare Verbindungselemente (121, 131; 122, 132) aufweisen, die zueinander exakt ausgerichtet und diagonal über ein flexibles, im wesentlichen geradliniges Blatt (111, 112) verbunden sind, wobei das flexible Blatt (111) eines Teils (101) das flexible Blatt (112) des benachbarten Teils (102) kreuzt, dadurch gekennzeichnet, daß jedes Teil einen monolithischen einheitlichen Modul darstellt, wobei die einheitlichen Module mittels ihrer jeweiligen Verbindungselemente (121, 131; 122, 132) derart aneinandergefügt sind, daß jedes Verbindungselement eines Moduls in direktem Kontakt mit einem benachbarten Verbindungselement montiert ist, was zu einer axialen Schichtung führt.

2. Gelenk nach Anspruch 1, dadurch **gekennzeichnet,** daß das flexible Blatt (111) jedes Moduls an jedem Ende eine Übergangszone (141, 151) mit einem fortschreitend veränderlichen Querschnitt hat, die eine Verbindung zwischen dem Blatt (111) und jedem Verbindungselement (121, 133) bildet.

3. Gelenk nach einem der Ansprüche 1 oder 2, dadurch **gekennzeichnet,** daß das flexible Blatt (111, 112) eine Zone (161, 162) verminderter Dicke zwischen den beiden Verbindungselementen (121, 131; 122, 132) aufweist.

4. Gelenk nach Anspruch 1, 2 oder 3, dadurch **gekennzeichnet,** daß die flexiblen Blätter (111, 112) einander rechtwinklig kreuzen.

5. Gelenk nach einem der Ansprüche 1 bis 4, dadurch **gekennzeichnet,** daß die Verbindungselemente (121, 131; 122, 132) der Module (101, 102) durch Kleben, Löten oder anodisches Bonden zusammengesetzt sind.

6. Verfahren zum Herstellen eines einheitlichen Moduls eines Gelenks nach einem der Ansprüche 1 bis 5, dadurch **gekennzeichnet,** daß das Verfahren eine Herstellung von Metallplatten durch Elektroerosion umfaßt.

7. Verfahren zum Herstellen eines einheitlichen Moduls eines Gelenks nach einem der Ansprüche 1 bis 5, **dadurch gekennzeichnet,** daß das Verfahren ein Spritzen von Kunststoff umfaßt, der durch Fasern mit hohem Widerstand verstärkt ist.

8. Verfahren zum Herstellen eines einheitlichen Moduls eines Gelenks nach einem der Ansprüche 1 bis 5, **dadurch gekennzeichnet,** daß das Verfahren ein Mikrolithographieren in Bereichen einer Siliziumscheibe umfaßt.

9. Verfahren nach einem der Ansprüche 6 bis 8, dadurch **gekennzeichnet**, daß der einheitliche Modul (101; 102) im Inneren eines Tragrahmens (201, 202) realisiert ist, an welchem er provisorisch über Befestigungsbrücken (211, 221; 212, 222) angebunden ist.

10. Anordnung von flexiblen planaren Gelenken nach einem der Ansprüche 1 bis 5, dadurch **gekennzeichnet,** daß sie Mittel zur Kompensation von Unwuchts- oder Unrundheits-Effekten umfaßt.

11. Anordnung nach Anspruch 10, **dadurch gekennzeichnet,** daß sie ein internes Interface (401) umfaßt, das mit jedem Ende an einem externen Interface (402, 402') über einen Aufbau (300, 300') aus flexiblen planaren Gelenken (100) mit zwei in Reihe angeordneten einheitlichen Modulen mit sich kreuzenden Blättern angebunden ist.

12. Anordnung nach Anspruch 10, **dadurch gekennzeichnet,** daß sie einerseits eine erste planare Struktur (S1) aus mindestens einem flexiblen planaren Gelenk (500) mit zwei einheitlichen Modulen mit sich kreuzenden Blättern, dessen erste Verbindungselemente (501) ein erstes starres Verbindungsteil und dessen zweite Verbindungselemente (502) ein zwischengeschaltetes Abstands-Verbindungsteil bildet, das mit einem zweiten starren Verbindungsteil (503) über ein elastisches, rechtwinklig zum Gelenk (500) angeordnetes Parallelogramm (504) verbunden ist, und andererseits eine zweite planare Struktur (S2) aufweist, die mit der ersten planaren Struktur identisch ist, wobei die erste (S1) und zweite (S2) planare Struktur parallel zueinander in einer Kopf-an-Fuß-Anordnung aufeinandergesetzt sind und jeweils über ihre ersten (501, 501') und zweiten (503, 503') starren Interfaces zusammengefügt sind und die zwischengeschalteten Abstands-Verbindungsteile (502, 502') frei sind.

13. Verwendung des flexiblen planaren Gelenkes nach einem der Ansprüche 1 bis 5 zur Realisierung einer Universal-Anordnung einer Gelenkverbindung, dadurch **gekennzeichnet,** daß ein zentrales Interface (701), das in ein äußeres Interface (702) einfügbar ist, schwenkbeweglich bezüglich des äußeren Interfaces (702) dank zumindest eines flexiblen planaren Gelenks (600, 601) mit zwei einheitlichen Modulen mit sich kreuzenden Blättern montiert ist, dessen Verbindungselemente (601, 601', 602, 602') jeweils an das zentrale Interface (701) bzw. an das externe Interface (702) angebunden sind.

14. Verwendung der Universal-Anordnung nach Anspruch 13 zur Realisierung einer Cardan-Anordnung, dadurch **gekennzeichnet,** daß das zentrale Interface (701) mindestens ein flexibles planares Gelenk (700) mit zwei unitären Modulen mit sich kreuzenden Blättern umfaßt, die rechtwinklig zu dem flexiblen planaren Gelenk (600, 600') liegen und das zentrale Interface (701) an ein zweites externes Interface (703) anbinden.

15. Verwendung der Universal-Anordnung nach Anspruch 13 zur Realisierung einer Gelenkverbindung mit Kontaktanschlag, dadurch **gekennzeichnet,** daß das zentrale Interface (701) einen einstellbaren axialen Anschlag (801) umfaßt, der durch eine Klemmschraube (802) gehalten ist.

16. Verwendung der Universal-Anordnung nach Anspruch 13 zur Realisierung einer Gelenkverbindung mit einem Torsionsstab, **dadurch gekennzeichnet,** daß das zentrale Interface (701) einen axial einstellbaren Torsionsstab (901) und mindestens eine Klemmschraube umfaßt.

17. Verwendung des flexiblen planaren Gelenks nach einem der Ansprüche 1 bis 5 bei einem elektrodynamischen Aktor mit Magnet und Spule, dadurch **gekennzeichnet,** daß die Spule (170) mit einem Schwenk-Interface (110) fest verbunden ist, welches über das Gelenk (100) schwenkbeweglich ist, während das andere Interface (120) mit dem Magneten fest verbunden ist.

18. Verwendung nach Anspruch 17 für Arme von Mehrfachscheiben, dadurch **gekennzeichnet,** daß die Arme (130) jeweils mit einem flexiblen planaren Element (100) für eine individuelle Orientierung jedes Arms ausgestattet sind.

19. Verwendung des flexiblen planaren Gelenkes nach einem der Ansprüche 1 bis 5 für einen integrierten Winkelpositionssensor, **dadurch gekennzeichnet,** daß
- das flexible Blatt (111) und eines der zwei starren Elemente (121 oder 131) einen Widerstandsstreifen, Piezo-Widerstandsstreifen oder piezo-elektrischen Streifen (180) aufweisen, durch den ein geschlossener Schaltkreis (ABCD) realisiert wird, so daß die Werte der gemessenen Parameter zwischen dem Punkt A und den Punkten C und D als Funktion des Drehwinkels (φ) des flexiblen Blattes variieren, während die Werte zwischen dem Punkt B und den Punkten C und D konstant bleiben, und
- daß mindestens die Punkte A, C und D mit einem Schaltkreis zum Messen der Werte von variablen Parametern verbunden sind.

20. Anordnung von flexiblen planaren Gelenken nach einem der Ansprüche 1 bis 5, dadurch **gekennzeichnet,** daß sie zwei flexible Gelenke umfaßt, die so ineinandergeschachtelt sind, daß ihre Drehmitten zueinander versetzt sind,
- wobei ein erstes Gelenk (721) einen ersten einheitlichen Modul (722) und einen zweiten einheitlichen Modul umfassen, die jeweils zum einen an einem Hebelarm (724) und zum anderen an einem beweglichen Stück (725) befestigt sind,
- wobei ein zweites Gelenk (722) einen ersten Modul (727) und einen zweiten Modul (728) umfassen, die jeweils zum einen an dem Hebelarm (724) und zum anderen an einer festen Basis (729) befestigt sind.

21. Anordnung nach Anspruch 20, **dadurch gekennzeichnet,** daß der Hebelarm (724) mit einer piezo-elektrischen Vorrichtung (730) verbunden ist.

## Claims

1. Flexible planar crossed-strip pivot, formed by at least two identical parts (101, 102) each comprising two rigid, co-planar connecting elements (121, 131; 122, 132) arranged substantially facing one another and connected diagonally by a substantially straight flexible strip (111, 112), the flexible strip (111) of one part (101) forming a cross with the flexible strip (112) of an adjacent part (102), characterised in that each part is a single module forming a monolithic whole, the single modules being joined together by their respective connecting elements (121, 131; 122, 132) in such a way that each connecting element of a single module is joined in direct contact with an adjoining connecting element, thus producing an axial stack.

2. Pivot according to claim 1, characterised in that the flexible strip (111) of each single module has, at each end, a transitional zone (141, 151) of gradually varying section which forms a joint between the strip (111) and each connecting element (121, 131).

3. Pivot according to either of claims 1 or 2, characterised in that said flexible strip (111; 112) has a zone (161, 162) of thickness decreasing between the two connecting elements (121, 131; 122, 132).

4. Pivot according to claim 1, 2 or 3, characterised in that said flexible strips (111, 112) cross at right angles.

5. Pivot according to any of claims 1 to 4, characterised in that the connecting elements (121, 131; 122, 132) of the single modules are joined together by bonding, welding, soldering or anodic connection.

6. Method of producing a single module of a pivot according to any of claims 1 to 5, characterised in that said method consists of machining metal plates by wire spark erosion.

7. Method of producing a single module of a pivot according to any of claims 1 to 5, characterised in that said method consists of injecting plastics material reinforced with high-strength fibres.

8. Method of producing a single module of a pivot according to any of claims 1 to 5, characterised in that said method consists of microlithographic-etching in batches from a silicon wafer.

9. Method according to any of claims 6 to 8, characterised in that said single module (101; 102) is produced within a supporting frame (201; 202) to which it is temporarily connected by linking bridges (211, 221; 212, 222).

10. Assemblage of flexible planar pivots according to any of claims 1 to 5, characterised in that it comprises means for compensating for the effects of imbalance or out-of-round.

11. Assemblage according to claim 10, characterised in that it comprises an inner interface (401) which is connected at each end to an outer interface (402, 402') via a set (300, 300') of flexible planar pivots (100) having two single crossed-strip modules which are arranged in series.

12. Assemblage according to claim 10, characterised in that it comprises on the one hand a first planar structure (S1) comprising at least one flexible planar pivot (500) having two single crossed-strip modules of which first connecting elements (501) form a first rigid interface and of which second connecting elements (502) form an intermediate interface for backward movement, which intermediate interface is connected to a second rigid interface (503) by a resilient parallelogram (504) orthogonal to the pivot (500), and on the other hand a second planar structure (S2) identical to the first, said first (S1) and second (S2) structures being superimposed in parallel in opposed orientations and being joined together by their respective first (501, 501') and second (503, 503') rigid interfaces, said intermediate interfaces for backward movement (502, 502') being free.

13. Application of the flexible planar pivot according to any of claims 1 to 5 to the production of a universal mounting for pivoting connection, characterised in that a central interface (701) which can be inserted in an outer interface (702) is mounted to pivot relative to said outer interface (702) by means of at least one flexible planar pivot (600, 601) having two single crossed-strip modules whose connecting elements (601, 601'; 602, 602') are respectively fixed to the central interface (701) and the outer interface (702).

14. Application of the universal mounting according to claim 13 to the production of a universally-jointed mounting, characterised in that said central interface (701) comprises at least one flexible planar pivot (700) having two single crossed-strip modules which is orthogonal to said flexible planar pivot (600, 600') and which connects said central interface (701) to a second outer interface (703).

15. Application of the universal mounting according to claim 13 to the production of a pivoting joint having a contact abutment, characterised in that said central interface (701) includes an adjustable axial contact abutment (801) which is held in place by a clamping screw (802).

16. Application of the universal mounting according to claim 13 to the production of a pivoting torsion-rod joint, characterised in that said central interface (701) includes an adjustable axial torsion rod (901) and at least one clamping screw (902).

17. Application of the flexible planar pivot according to any of claims 1 to 5 to an electrodynamic magnet-and-coil actuator, characterised in that said coil (170) is secured to a pivoting interface (110) of the pivot (100), the other interface (120) being fixed and being secured to said magnet.

18. Application according to claim 17 to arms for multiple disks, characterised in that said arms (130) are each equipped with a flexible planar pivot (100) to allow each arm to be individually orientated.

19. Application of the flexible planar pivot according to any of claims 1 to 5 to an integral angular-position sensor, characterised in that:
- the flexible strip (111) and one of the two rigid elements (121 or 131) include a tape of the resistive, piezoresistive or piezoelectric type (180) which produces a closed loop (ABCD) such that the values of the parameters measured between point A and points C and D vary as a function of the angle of rotation (Φ) of the flexible strip whereas the values between point B and points C and D remain constant, and
- at least points A, C and D are connected to a circuit for measuring the values of the variable parameters.

20. Assemblage of flexible planar pivots according to any of claims 1 to 5, characterised in that it comprises two flexible pivots which are imbricated one into the other in such a way that their centres of rotation are offset from one another,
- a first pivot (721) comprising a first single module (722) and a second single module which are each fixed on the one hand to a lever arm (724) and on the other to a moving part (725),
- a second pivot (726) comprising a first module (727) and a second module (728) which are each fixed on the one hand to the lever arm (724) and on the other to a fixed base (729).

21. Assemblage according to claim 20, characterised in that the lever arm (724) is connected to a piezoelectric device (730).
